# EUROPÄISCHE PATENTANMELDUNG

(11) **EP 4 708 635 A1**
(43) Veröffentlichungstag der Anmeldung: **11.03.2026**
(21) Anmeldenummer: 24198540.7
(22) Anmeldetag: 05.09.2024
(51) Int. Cl.: H02K 1/20, H02K 1/2796, H02K 1/32, H02K 5/20, H02K 21/24

(54) **KÜHLUNG FÜR EINE AXIALFLUSSMASCHINE**

(71) Anmelder: Miba eMobility GmbH, 4663 Laakirchen (AT)
(72) Erfinder: Morawetz, Rudolf, 4663 Laakirchen (AT)
(74) Vertreter: Harringer, Thomas

(57) **Zusammenfassung**

Die Erfindung betrifft eine Axialflussmaschine mit einem ersten scheibenförmigen Stator mit Statorzähnen und mit, um die Statorzähne angeordnete, elektrischen Wicklungen und mit einem entlang einer Zentralachse neben dem ersten Stator angeordneten und um die Zentralachse drehbar ausgeführten, scheibenförmigen Rotor mit einer ersten und einer zweiten Stirnfläche, die axial voneinander beabstandeten sind, wobei der Rotor mehrere Magnete aufweist, wobei die Magnete kreisförmig um die Zentralachse angeordnet sind und wobei es sich insbesondere Permanentmagnete handelt, und mit einem Gehäuse mit einem Gehäuseinnenraum, in dem der erste Stator und der Rotor angeordnet sind, und mit zumindest einer ersten Gehäuseinnenwand, die der ersten Stirnfläche des Rotors gegenüberliegt und zumindest einer zweiten Gehäuseinnenwand, die der zweiten Stirnfläche des Rotors gegenüberliegt, und wobei der erste Stator zwischen erster Gehäuseinnenwand und der ersten Stirnfläche des Rotors angeordnet ist und der erste Stator und die erste Stirnfläche des Rotors durch einen ersten Zwischenraum axial beabstandet ist und die zweite Stirnfläche des Rotor von der zweiten Gehäuseinnenwand durch einen zweiten Zwischenraum axial beabstandet ist, und wobei das Gehäuse einen Kühlmittelkanal mit einem Kühlmittelauslass aufweist oder das Gehäuse und der erste Stator einen Kühlmittelkanal mit einem Kühlmittelauslass aufweist, wobei der Kühlmittelauslass jener Teil des Kühlmittelkanals ist, welcher dem Rotor axial am nächsten benachbart ist, und wobei der Rotor einen Rotorkühlkanal mit einem Rotorkühlmitteleinlass aufweist, wobei der Rotorkühlmitteleinlass auf der dem Kühlmittelauslass zugendwandten Stirnfläche des Rotors angeordnet ist.

## Beschreibung

Die Erfindung betrifft eine Axialflussmaschine mit einem ersten scheibenförmigen Stator mit Statorzähnen und mit, um die Statorzähne angeordnete, elektrischen Wicklungen und mit einem entlang einer Zentralachse neben dem ersten Stator angeordneten und um die Zentralachse drehbar ausgeführten, scheibenförmigen Rotor mit einer ersten und einer zweiten Stirnfläche, die axial voneinander beabstandet sind, wobei der Rotor mehrere Magnete aufweist, wobei die Magnete kreisförmig um die Zentralachse angeordnet sind und wobei es sich insbesondere um Permanentmagnete handelt, und mit einem Gehäuse mit einem Gehäuseinnenraum, in dem der erste Stator und der Rotor angeordnet sind, und mit zumindest einer ersten Gehäuseinnenwand, die der ersten Stirnfläche des Rotors gegenüberliegt und zumindest einer zweiten Gehäuseinnenwand, die der zweiten Stirnfläche des Rotors gegenüberliegt, und wobei der erste Stator zwischen erster Gehäuseinnenwand und der ersten Stirnfläche des Rotors angeordnet ist und der erste Stator und die erste Stirnfläche des Rotors durch einen ersten Zwischenraum axial beabstandet ist und die zweite Stirnfläche des Rotor von der zweiten Gehäuseinnenwand durch einen zweiten Zwischenraum axial beabstandet ist, und wobei das Gehäuse einen Kühlmittelkanal mit einem Kühlmittelauslass aufweist oder das Gehäuse und der erste Stator einen Kühlmittelkanal mit einem Kühlmittelauslass aufweist, wobei der Kühlmittelauslass jener Teil des Kühlmittelkanals ist, welcher dem Rotor axial am nächsten benachbart ist, und wobei der Rotor einen Rotorkühlkanal mit einem Rotorkühlmitteleinlass aufweist, wobei der Rotorkühlmitteleinlass auf der dem Kühlmittelauslass zugendwandten Stirnfläche des Rotors angeordnet ist.

Aus dem Stand der Technik sind verschiedene Ausführungen von Axialflussmaschinen bekannt. Beispielsweise sind aus den Veröffentlichungen WO2021003509A1 und DE 102019000666A1 Axialflussmaschinen in der Konfiguration mit einem oder mehreren Statoren, Statorrückschlüssen und einem oder mehreren Rotoren bekannt.

Im Zusammenhang mit der entstehenden Wärme im Betrieb einer Axialflussmaschine ist es ein aus dem Stand der Technik bekanntes, technisches Problem, dass eine unzureichende Wärmeabfuhr und damit auch ein Aufheizen des Rotors zu einer Beeinträchtigung der Leistung einer solchen Maschine führt. Der Rotor arbeitet dabei meist innerhalb eines Gehäuses, wobei Kühlsysteme häufig im Gehäuse, dessen Außenseite oder im Stator vorgesehen sind. Eine ausreichende Kühlung des Rotors erweist sich dennoch oftmals als schwierig, da eine ausreichende Wärmeleitung über den Zwischenraum zwischen Rotor und Gehäuse oder über die Welle oder den Stator oftmals nicht erreichbar ist.

Die WO2015019107A2 zeigt ein Kühlsystem für eine Axialflussmaschine, insbesondere zur Kühlung des Rotors, wobei sich die Kühlflüssigkeit in einem im Sumpf befindet, und die Drehung des Rotors durch die Flüssigkeit bewirkt, dass die Flüssigkeit vom Rotor aufgenommen wird, nach außen geschleudert und auf die den Rotor umgebenden Teile gespritzt wird. Diese Lösung hat jedoch den Nachteil, dass die Bewegung des Rotors durch den Sumpf beziehungsweise das Vorhandensein von Kühlflüssigkeit im Luftspalt zwischen Rotor und Stator zusätzlich Schlepp-bzw. Planschverluste verursacht und somit die Effizienz des Motors negativ beeinträchtigt wird.

Die CN221042440U zeigt einen Axialflussmotor mit einem Gehäuse mit einem Hohlraum, das Gehäuse ist mit einem Öleinlass und einem Ölrücklaufanschluss versehen, die mit dem Hohlraum in Verbindung stehen. Eine Rotorwelle ist drehbar mit dem Gehäuse verbunden und eine Rotorscheibe ist in dem Hohlraum angeordnet und die Rotorscheibe ist auf die Rotorwelle aufgeschoben und fest mit der Rotorwelle verbunden. Die Rotorscheibe ist ebenfalls mit Magneten versehen. Die Rotorscheibe ist außerdem mit einem Ölauslass versehen, der mit dem Hohlraum verbunden ist. Der Motor ist mit einem Kühlkanal versehen, der mit dem Öleinlass verbunden ist und sich durch das Gehäuse und die Rotorwelle zur Rotorscheibe erstreckt und mit dem Ölauslass verbunden ist. Diese Lösung hat jedoch den Nachteil, dass sie aufgrund des Einsatzes einer Hohlwelle fertigungstechnisch komplexer und kostspieliger ist, beziehungsweise in der Auslegung auch zusätzliche Dichtungen vorgesehen werden müssen.

Es stellt sich demnach dem Fachmann aus dem Stand der Technik die Aufgabe, einer leistungsfähigen Axialflussmaschine nach dem Oberbegriff nach Anspruch 1 zu entwickeln.

Diese technische Aufgabe wird durch den kennzeichnenden Teil des Anspruch 1 gelöst.

Eine Ausführungsform der Erfindung ist eine Axialflussmaschine mit einem ersten scheibenförmigen Stator mit Statorzähnen und mit, um die Statorzähne angeordnete, elektrischen Wicklungen mit einem entlang einer Zentralachse neben dem ersten Stator angeordneten und um die Zentralachse drehbar ausgeführten, scheibenförmigen Rotor. Der Rotor weist eine erste und einer zweite Stirnfläche, die axial voneinander beabstandeten sind, und mehrere Magnete auf. Die Magnete sind kreisförmig um die Zentralachse angeordnet. Die Magnete können dabei einerseits in Umfangsrichtung zueinander beabstandet sein, es kann sich bei den Magneten jedoch auch beispielsweise um einen einzelnen Ringmagneten der entsprechend magnetisch strukturiert wurde. Es handelt sich dabei insbesondere um Permanentmagnete. Die Axialflussmaschine weist ein Gehäuse mit einem Gehäuseinnenraum, in dem der erste Stator und der Rotor angeordnet sind, und mit zumindest einer ersten Gehäuseinnenwand, die der ersten Stirnfläche des Rotors gegenüberliegt und zumindest einer zweiten Gehäuseinnenwand, die der zweiten Stirnfläche des Rotors gegenüberliegt, auf. Dabei ist der erste Stator zwischen erster Gehäuseinnenwand und der ersten Stirnfläche des Rotors angeordnet und der erste Stator und die erste Stirnfläche des Rotors durch einen ersten Zwischenraum axial beabstandet. Des Weiteren ist die zweite Stirnfläche des Rotor von der zweiten Gehäuseinnenwand durch einen zweiten Zwischenraum axial beabstandet. Zudem weist entweder das Gehäuse einen Kühlmittelkanal mit einem Kühlmittelauslass auf oder das Gehäuse und der erste Stator weisen einen Kühlmittelkanal mit einem Kühlmittelauslass auf. Der Kühlmittelauslass ist jener Teil des Kühlmittelkanals, welcher dem Rotor axial am nächsten benachbart ist. Dabei weist der Rotor einen Rotorkühlkanal mit einem Rotorkühlmitteleinlass auf, wobei der Rotorkühlmitteleinlass auf der dem Kühlmittelauslass zugendwandten Stirnfläche des Rotors angeordnet ist. Des Weiteren sind der Kühlmittelauslass und der Rotorkühlmitteleinlass voneinander in axialer Richtung beabstandet und über den ersten oder den zweiten Zwischenraum fluidverbunden. Insbesondere ist dabei für den Fall, dass sich der Kühlmittelauslass im Gehäuse befindet, die Fluidverbindung über den zweiten Zwischenraum gegeben ist. Für den Fall, dass sich der Kühlmittelauslass im ersten Stator befindet, ist die Fluidverbindung über den ersten Zwischenraum gegeben.

Der Kühlmittelauslass und der Rotorkühlmitteleinlass beziehungsweise der Rotor sind demnach nicht in direktem Kontakt miteinander aber dennoch miteinander fluidverbunden. Dies kann beispielsweise derart gelöst sein, dass das Kühlmittel vom Kühlmittelauslass zum Rotorkühlmitteleinlass über den jeweiligen Zwischenraum hinweg befördert, beispielsweise gespritzt wird. Die berührungslose Ausführung hat den Vorteil, dass somit zusätzliche Reibverluste vermieden werden können. Kühlmittelauslass und Rotorkühlmitteleinlass müssen dabei nicht direkt miteinander fluidverbunden sein. So kann das Kühlmittel beispielsweise auch zuerst auf einer Stirnfläche des Rotors auftreffen und dann exemplarisch über Zentrifugalkräfte in den Rotorkühlmitteleinlass befördert werden. Hingegen soll die Ausbildung eines Ölsumpfes, der mit dem Rotor in Berührung kommt, nach Möglichkeit vermieden werden, um die zuvor genannten zusätzlichen Schleppverluste zu verhindern.

Nach einer möglichen Ausführungsform der Erfindung weist der Rotorkühlkanal dabei einen Rotorkühlmitteleinlass mit axialer Erstreckungsrichtung und einen Rotorkühlmittelauslass mit radialer Erstreckungsrichtung auf. Dabei ist der Rotorkühlmitteleinlass radial unterhalb der Magnete positioniert und der Rotorkühlmittelauslass verläuft bis zum Außenumfang des Rotors. Des Weiteren sind der Rotorkühlmitteleinlass und Rotorkühlmittelauslass miteinander fluidverbunden.

Diese Ausführungsvariante hat den Vorteil, dass dabei beispielsweise das Kühlmittel über den axialen Rotorkühlmitteleinlass in das Innere des Rotors geführt werden kann und dann an thermisch und mechanisch günstigen Positionen über den Rotorkühlmitttelauslass radial bis zum Außenumfang geführt werden kann, wo das Kühlmittel aus dem Rotor in den Gehäuseinnenraum austreten kann. Dabei kann auch eine Mehrzahl an Rotorkühlmitteleinlässen und -auslässen vorgesehen sein. Zudem kann ein einzelner Rotorkühlmitteleinlass beispielsweise auch mit einer Mehrzahl an Rotorkühlmittelauslässen fluidverbunden sein. Eine mögliche Ausführungsvariante hier wäre, dass zwischen Rotorkühlmitteleinlass und Rotorkühlmittelauslass noch eine ringförmige Kavität verläuft über den Rotorkühlmitteleinlass und -auslass fluidverbunden sind und der das Kühlmittel entsprechend in die Rotorkühlmittelauslässe verteilt.

Nach einer möglichen Ausführungsform der Erfindung weist der Rotor einen, insbesondere aus einem weichmagnetischen Material gefertigten, Rotorrückschluss auf. Dabei sind die Magnete des Rotors zumindest teilweise auf der dem ersten Stator zugewandten Seite und der Rotorrückschluss ist zumindest teilweise auf der dem ersten Stator abgewandten Seite des Rotors angeordnet. In dieser Ausführungsvariante könnte dabei der Rotorkühlmittelauslass beispielsweise durch den Rotorrückschluss verlaufen.

Nach einer möglichen Ausführungsform der Erfindung weist der Rotor eine, insbesondere sternförmige, Haltestruktur zur Aufnahme der Magnete auf. Dabei verläuft Rotorkühlkanal zumindest teilweise, insbesondere vollständig, innerhalb der Haltestruktur.

Nach einer möglichen Ausführungsform der Erfindung weist der Rotor eine Rotornabe und kreisförmig um die Zentralachse angeordnete Permanentmagnete, sowie eine am Außenumfang des Rotors angeordnete Abstützung auf. Dabei belastet die Abstützung die Permanentmagnete mit einer radial nach innen gerichteten Spannkraft. Zudem sitzen die Permanentmagnete auf der Rotornabe über eine mit Klebstoff versehene erste Klebefuge auf und sind zudem zueinander nur über eine zweite Klebefuge umfänglich voneinander beabstandet. Des Weiteren sind die Permanentmagnete derart facettiert sind, dass zueinander benachbart angeordnete Permanentmagnete über die Facetten den Rotorkühlkanal ausbilden. Die Facettierung der Permanentmagnete hat zudem den Vorteil, dass damit vermieden werden kann, dass die Permanentmagnete aufwändig nachbearbeitet werden müssen, beispielsweise über eine Einbringung von Kühlkanälen durch entsprechende Bohrungen. Der Rotorkühlkanal kann beispielsweise ausschließlich über die Facetten ausgebildet werden, aber auch Kombinationen mit den Klebefugen und dem darin befindlichen Klebstoff zur Ausbildung des Rotorkühlkanals sind denkbar.

Nach einer möglichen Ausführungsform der Erfindung ist im Bereich des zweiten Zwischenraums ein zweiter Stator mit Statorzähnen und, um die Statorzähne angeordnete, elektrische Wicklungen, entlang der Zentralachse angeordnet. Des Weiteren sind der zweite Stator und der Rotor durch einen dritten Zwischenraum axial voneinander beabstandet. Bei dem dritten Zwischenraum handelt es sich demnach um einen Teilraum es zweiten Zwischenraums. Diese Anordnung hat den Vorteil, dass dadurch wesentlich höhere Drehmomente erreicht werden können.

Bei der zuvor genannten Ausführungsform kann dabei insbesondere vorgesehen sein, dass das Gehäuse und der erste und der zweite Stator einen Kühlmittelkanal aufweisen und der erste Stator einen ersten Kühlmittauslass aufweist und der zweite Stator einen zweiten Kühlmittelauslass aufweist. Dabei ist ein erster Rotorkühlmitteinlass an der dem ersten Kühlmittelauslass zugewandten Stirnflächen des Rotors und ein zweiter Rotorkühlmitteleinlass an der dem zweiten Kühlmittelauslass zugewandten Stirnfläche des Rotors angeordnet. Des Weiteren ist der erste und zweite Rotorkühlmitteleinlass von dem ersten und dem zweiten Kühlmittelauslass axial beabstandet und der erste Kühlmittelauslass ist mit dem ersten Rotorkühlmitteleinlass über den ersten Zwischenraum fluidverbunden und der zweiten Kühlmittelauslass mit dem zweiten Rotorkühlmitteleinlass über den dritten Zwischenraum fluidverbunden. Diese Ausführungsform hat den Vorteil, dass dabei der Rotor von beiden Seiten aus gekühlt werden kann.

Nach einer möglichen Ausführungsform der Erfindung, wird ein sich im Rotor oder auf einer Stirnfläche des Rotors befindliches Kühlmittel durch die Ausbildung einer Zentrifugalkraft in oder durch den Rotorkühlkanal befördert. Dies hat den Vorteil, dass die Kühlmittelbeförderung in oder durch den Rotor durch die Rotation des Rotors bewirkt werden kann und keine zusätzlichen Systeme, wie beispielsweise Pumpen, zur Beförderung des Kühlmittels im Rotor notwendig sind.

Nach einer möglichen Ausführungsform der Erfindung weist der Kühlmittelauslass eine Mittelachse auf und der Rotorkühlmitteleinlass weist eine Mittelachse auf. Dabei sind die Mittelachse des Kühlmittelauslasses und die Mittelachse des Rotorkühlmitteleinlasses in radialer Richtung voneinander beabstandet. Zudem ist vorgesehen, dass die Mittelachse des Rotorkühlkühlmitteleinlasses radial weiter entfernt von der Zentralachse ist als die Mittelachse des Kühlmittelauslasses. Diese Ausführung hat den Vorteil, dass bei einer radialen Versetzung der beiden Mittelachsen zueinander, man sich die Zentrifugalkraft des rotierenden Rotors zunutze machen kann, um damit das Kühlmittel von der Stirnfläche des Rotors in den Rotorkühlmitteleinlass zu befördern.

Nach einer möglichen Ausführungsform der Erfindung weist der Rotor ein Ringelement auf. Das Ringelement ist dabei an der dem Kühlmittelkanalauslass zugewandten Stirnfläche des scheibenförmigen Rotors und radial angrenzend an den Rotorkühlmitteleinlass angeordnet. Des Weiteren ist das Ringelement vorteilhafterweise stoffschlüssig, insbesondere vorteilhafterweise durch Umspritzen, mit dem Rotor verbunden. Bei dem Ringelement kann es sich dabei auch um eine ringförmige Kavität an der Stirnfläche des Rotors handeln.

Der Vorteil des Ringelements ist jener, dass darüber eine Beförderung des Kühlmittels in den Rotorkühlmitteleinlass erleichtert werden soll. Kühlmittel, dass beispielsweise vom Kühlmittelauslass auf die Stirnfläche des Rotors befördert wird, kann über Zentrifugalkräfte in den Rotorkühlmitteleinlass befördert werden. Das Ringelement hat den zusätzlichen Vorteil, dass dadurch ein Reservoir ausgebildet wird, in dem das Kühlmittel aufgestaut und verteilt werden kann, bis es in den Rotorkühlmitteleinlass abfließen kann. Zudem bietet das Ringelement den zusätzlichen Vorteil, dass es auch ein Eindringen des Kühlmittels in den Luftspalt verhindert und so die Effizienz des Motors erhöht wird. Denkbare Ausführungsformen des Ringelements sind ringförmige Kavitäten, aber beispielsweise auch ringförmige Erhöhungen, beispielsweise in der Vergussmasse des Rotors. Eine ringförmige Kavität durch das Ringelement könnte beispielsweise derart ausgestaltet sein, dass sich das Ringelement einen axialen Steg aufweist, der sich von der Stirnfläche des Rotors in axiale Richtung erstreckt und an den axialen Steg ein radialer Steg angeordnet ist, der sich radial in Richtung der Zentralachse erstreckt. Auch eigene Einlegeteile, die anschließend umspritzt werden und andere für den Fachmann naheliegende Ausführungsformen sind denkbar. Das Ringelement ist derart ausgeführt, dass es nicht in Berührung mit dem Stator beziehungsweise dem Gehäuse ist, sodass Reibungsverluste minimiert werden.

Nach einer möglichen Ausführungsform der Erfindung befindet sich an einer Innenfläche des Gehäuses ein Abstreifelement, das sich zum Außenumfang des Rotors erstreckt. Des Weiteren ist benachbart an das Abstreifelement ein Rückführkanal im Gehäuse angeordnet, wobei der Rückführkanal mit dem Kühlmittelkanal fluidverbunden ist. Der Vorteil ist, dass durch das Abstreifelement überschüssiges Kühlmittel, das aus dem Rotorkühlmittelauslass austritt, abgestreift werden kann und somit die Ausbildung eines ausgeprägten Sumpfes im Gehäuseinneren verhindert werden kann. Die Ausbildung eines Kühlmittel-Sumpfes kann die Effizienz des Motors negativ beeinträchtigen. Derart abgestreiftes Kühlmittel wird im Anschluss über den Rückführkanal zum Kühlmittelkanal zur Ausbildung des Kühlkreislaufes zurückgeführt. Das Abstreifelement erstreckt sich vorteilhafterweise soweit zum Rotor, dass nur ein minimaler Ölfilm auf dem Rotor verbleibt, aber das Abstreifelement den Außenumfang des Rotors gerade nicht berührt, um keine unnötigen Reibungsverluste zu erzeugen. Allerdings sind auch berührende Ausführungsformen oder Ausführungsformen, die größere Ölfilme zulassen denkbar.

Nach einer möglichen Ausführungsform der Erfindung erfolgt die Rückführung des Kühlmittels vom Rückführkanal zum Kühlmittelkanal mittels einer Kühlmittelpumpe. Dies hat den Vorteil, dass man bei der Gestaltung des Kühlkreislaufes und der Positionierung des Kühlmittelkanals und des Rückführkanals eine größere, gestalterische Freiheit hat.

Nach einer möglichen Ausführungsform der Erfindung ist das Abstreifelement und der Rückführkanal höher positioniert sind als der Kühlmittelkanalauslass, sodass die Rückführung des Kühlmittels vom Rückführkanal zum Kühlmittelkanalauslass ohne eine Kühlmittelpumpe erfolgen kann. Der Vorteil dieser Ausführungsvariante ist, dass auf den Einsatz einer Kühlmittelpumpte verzichtet werden kann.

Nach einer möglichen Ausführungsform der Erfindung befindet sich an einer Innenfläche des Gehäuses ein zweites Abstreifelement, das sich zum Außenumfang des Rotors erstreckt. Benachbart an das zweite Abstreifelement ist ein zweiter Rückführkanal im Gehäuse angeordnet, wobei die Position des zweiten Abstreifelements und des zweiten Rückführkanals der Position des ersten Abstreifelements beziehungsweise der Position des ersten Rückführkanals auf gleicher Höhe gegenüberliegend ist. Der Vorteil hierbei ist, dass über diese Anordnung das Kühlmittel auch bei einer Drehrichtungsumkehr des Rotors effizient abgeführt werden kann.

Nach einer möglichen Ausführungsform der Erfindung ist die Strömungsgeschwindigkeit eines Kühlmittels im Kühlmittelkanal zumindest derart hoch, dass es direkt auf gegenüberliegende Stirnfläche des Rotors beziehungsweise in den Rotorkühlmitteleinlass gespritzt wird. Dies hat den Vorteil, dass die Beförderung des Kühlmittels über den jeweiligen Zwischenraum effizient und ohne Ausbildung eines signifikanten Kühlmittelsumpfes, der mit dem Rotor in Berührung ist, vonstattengehen kann.

Nach einer möglichen Ausführungsform der Erfindung weist der Kühlmittelkanal einen Querschnitt und der Kühlmittelauslass einen bestimmten Querschnitt auf. Dabei ist der Querschnitt des Kühlmittelauslasses gegenüber dem Querschnitt des Kühlmittelkanals verjüngt. Eine Verjüngung des Querschnitts vor dem Austritt des Kühlmittels hat dabei den Vorteil, dass damit die Strömungsgeschwindigkeit des Kühlmittels erhöht werden kann. Dies kann beispielsweise wichtig sein, wenn die Strömungsgeschwindigkeit im Kühlmittelkanal ansonsten zu niedrig wäre, um eine Beförderung des Kühlmittels über den jeweiligen Zwischenraum zu erreichen.

Die Erfindung ist nachfolgend anhand schematischer Zeichnungen in verschiedenen möglichen, nicht-einschränkenden Ausführungsbeispielen, beispielhaft erläutert. Es zeigen:
Fig. 1 eine allgemeine schematische Ansicht einer Axialflussmaschine
Fig. 2 eine weitere allgemeine schematische Ansicht einer Axialflussmaschine
Fig. 3 eine schematische Ansicht eines Details eines Stators einer Axialflussmaschine
Fig. 4 zeigt eine schematische Ansicht einer Axialflussmaschine mit einer möglichen Ausführung einer erfindungsgemäßen Kühlung
Fig. 5 zeigt eine schematische Ansicht einer Axialflussmaschine mit zwei Statoren und einem Kühlmittelkanal sowohl im Gehäuse als auch in einem der Statoren.
Fig. 6 zeigt eine schematische Ansicht des Rotors und des Gehäuses.
Fig. 7 zeigt eine schematische Ansicht eines Rotors.

Die Offenbarung der Veröffentlichung WO2021003510A3 und der EP3480930A1 der Anmelderin wird hiermit vollumfänglich in die Offenbarung der vorliegenden Anmeldung aufgenommen.

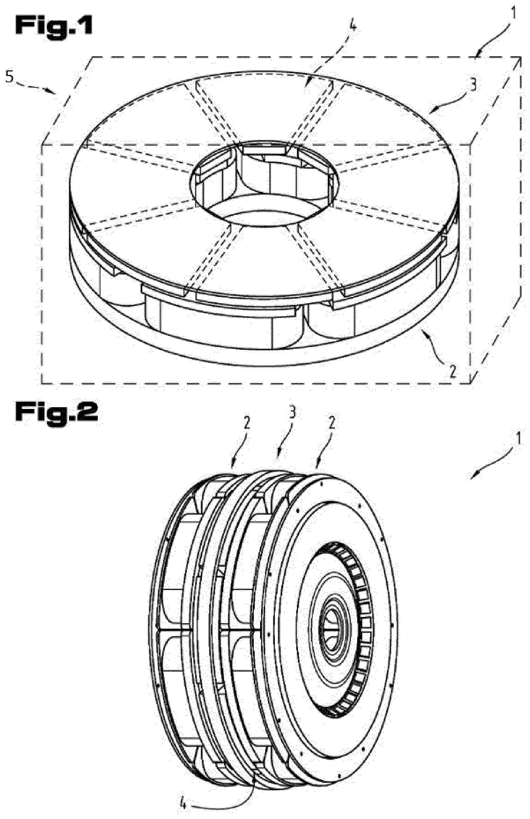

Fig. 1 zeigt eine erste Ausführungsvariante einer Axialflussmaschine 1 umfassend, zumindest einen Stator 2 und zumindest einen Rotor 3. Nach anderen möglichen Ausführungsformen (nicht dargestellt) sind Anordnungen mit mehreren Rotoren möglich, zwischen denen beispielsweise jeweils ein Stator angeordnet ist.

Auf dem Rotor 3 bzw. den Rotoren 3 sind Magnete 4, beispielsweise Permanentmagnete, angeordnet. Der zumindest eine Stator 2 und der zumindest eine Rotor 3 können in einem fakultativ vorhandenen Motorengehäuse 5 angeordnet sein, wie dies in Fig. 1 strichliert angedeutet ist.

Es können auch mehrere Statoren 2 angeordnet sein. In diesem Fall sind vorzugsweise alle Statoren 2 gleich ausgebildet, sodass die folgenden Ausführungen auch auf die gegebenenfalls weiter vorhandenen Statoren 2 angewandt werden können. Beispielsweise zeigt die Fig. 2 eine Ausführungsvariante der Axialflussmaschine 1, bei der nur ein Rotor 3 angeordnet ist. Der Rotor 3 ist - in der Axialrichtung betrachtet - zwischen zwei Statoren 2 angeordnet. Der Rotor 3 ist beidseitig mit mehreren Magneten 4 (Permanentmagnete) bestückt. Die beiden Statoren 2 sind so angeordnet, dass Rückschlusselemente bzw. ein Statorjoch jeweils auf der vom Rotor 3 abgewandten Seite des Stators 2 angeordnet sind.

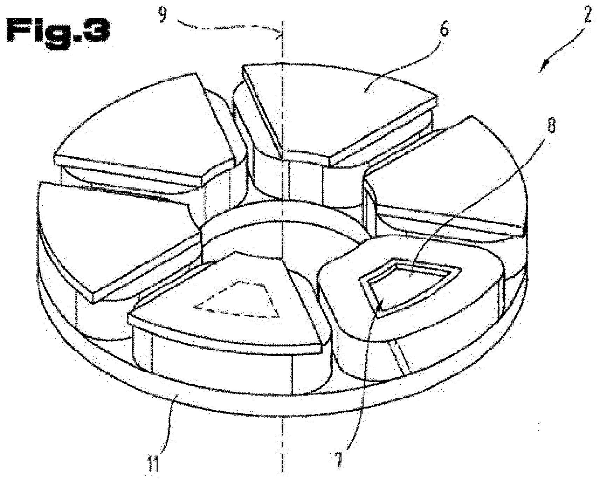

Fig. 3 zeigt eine weitere mögliche Ausführungsvariante eines Stators 2 für eine Axialflussmaschine 1. Der Stator 2 weist mehrere Statorzähne 7 auf. Die Statorzähne 7 weisen jeweils einen Zahnkörper 8 auf. Weiter weisen die Statorzähne 7 in einer Axialrichtung 9 gegenüberliegende Endabschnitte auf, die einen Zahnkopf und einen Zahnfuß bilden. Die Statorzähne 7 sind jeweils mit einer Spulenwicklung 10 (in Fig. 3 nur schematisch angedeutet) umwickelt. Statt einer Spulenwicklung ist jedoch eine verteilte Hairpinwicklung oder andere dem Fachmann geläufige Ausführungsformen denkbar. Die Zahnkörper 8 liegen in der Axialrichtung 9 an einem, insbesondere plattenförmigen, Rückschlusselement 11 auf oder sind zumindest teilweise in das Rückschlusselement 11 eingesteckt, wozu das Rückschlusselement entsprechende Ausnehmungen aufweist, in denen die Zahnkörper 8 bevorzugt formschlüssig aufgenommen sind. Das Rückschlusselement 11 ist vorzugsweise einstückig ausgebildet. Nach einer weiteren Ausführungsform ist das Rückschlusselement 11 vorzugsweise einstückig mit den Statorzähnen 7 ausgebildet. Nach einer weiteren möglichen Ausführungsform ist das Rückschlusselement 11 aus einem Elektroblech gewickelt. Auch Ausführungsformen ohne Rückschlusselement sind denkbar.

Zumindest zwischen der Spulenwicklung 10 und dem Zahnkörper 8 ist nach einer möglichen Ausführungsform eine nicht weiter dargestellte elektrische Isolierung angeordnet. Die Anzahl der in den Figuren dargestellten Statorzähne 7 ist nicht einschränkend zu verstehen. Vielmehr richtet sich deren Anzahl nach den jeweiligen Gegebenheiten in der Verwendung des Stators 2 bzw. der Axialflussmaschine 1 nach den gewünschten Leistungsmerkmalen der Anwendung.

Die Statorzähne 7 sind gleichmäßig verteilt über den Umfang des Stators 2 angeordnet. Insbesondere weisen in Richtung der Axialrichtung 9 betrachtet eine zumindest annähernd trapezförmigen Querschnittsfläche auf.

In Fig. 3 sind Flusssammelelemente 6 gezeigt bzw. an einer Stelle entfernt worden, um eine bessere Sicht auf die Statorzähne 7 zu ermöglichen. Der Einsatz von Flusssammelelementen ist jedoch optional und auch andere dem Fachmann geläufige Ausführungsvarianten sind denkbar.

Das, insbesondere ringförmige, Rückschlusselement 11 des Stators 2 kann aus einem hierfür üblichen Werkstoff bestehen. Nach einer besonderen Ausführungsform können die Statorzähne mit dem Statorrückschluss 11, der vom Fachmann auch als Statorjoch bezeichnet wird, einteilig bzw. einstückig ausgeführt sein. Auch der Rotor kann je nach Anwendungsfall einen Rotorrückschluss aufweisen.

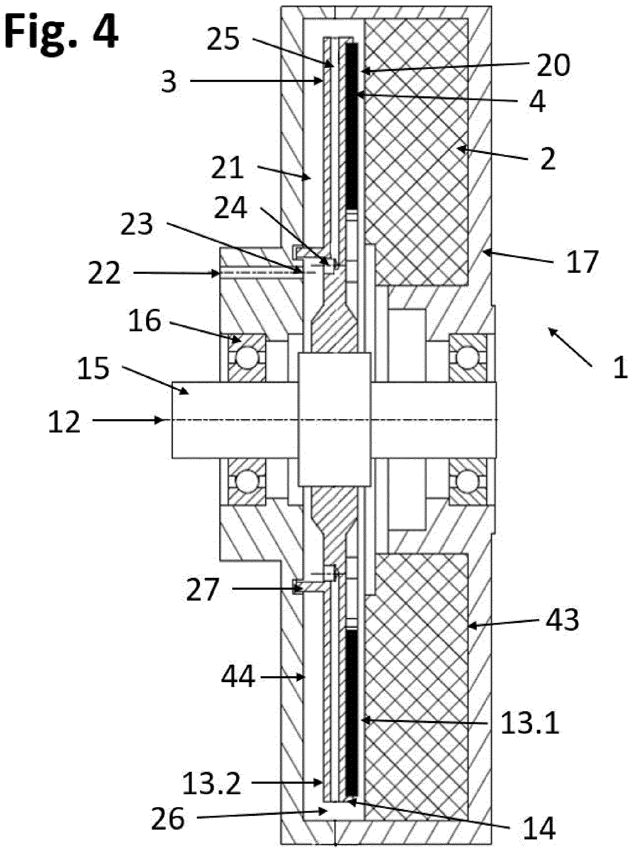

Fig. 4 zeigt schematisch eine mögliche Ausführungsform der erfindungsgemäßen Axialflussmaschine. Die Teile der Axialflussmaschine sind der besseren Übersichtlichkeit halber in einer schematischen Schnittansicht dargestellt. Die dargestellte Variante des Axialflussmotors wird auch als "single stator axial flux" - Variante bezeichnet. Dabei ist ein schematischer, scheibenförmiger Stator 2 gezeigt und entlang der Zentralachse 12 und neben dem Stator angeordneten befindet sich dabei ein ebenfalls schematisch dargestellter Rotor 3. Der scheibenförmige Rotor 3 weist dabei zwei Stirnflächen 13, eine erste 13.1 und zweite 13.2 Stirnfläche auf, die axial in Richtung der Zentralachse 12 beabstandet sind, sowie einen Rotor-Außenumfang 14 auf. Entlang der Zentralachse 12 ist dabei eine Rotorwelle 15 angeordnet, wobei der Rotor 3 mit dieser drehfest verbunden ist. Der Stator 2, Rotor 3 und Teile der Rotorwelle 15 sind dabei von einem Gehäuse 17 umgeben und sind in dessen Gehäuseinnenraum 26 angeordnet, wobei das Gehäuse zumindest eine erste und eine zweite Gehäuseinnenwand aufweist, wobei die erste Gehäuseinnenwand 43 der ersten Stirnfläche des Rotors 13.1 gegenüberliegt und die zweite Gehäuseinnenwand 44 der zweiten Stirnfläche des Rotors 13.2 gegenüberliegt. Für die Rotorwelle 15 sind geeignete Durchführungen 18 vorgesehen. Die Rotorwelle 15 ist dabei geeignet drehbar um die Zentralachse 12 gelagert. Die Lagerung kann dabei mittels geeigneter Lager 16 beispielsweise im Bereich des Stators Gehäuses 17 stattfinden, auch andere geeignete Lagerpositionen sind möglich. Es kann ebenfalls vorgesehen sein, dass der Stator 2 am Gehäuse 17 mittels einer Schraubverbindung oder anderen, dem Fachmann geläufigen, Methoden (nicht dargestellt) befestigt ist. Die erste Stirnfläche des Rotor 13.1 ist dabei vom Stator 2 durch einen ersten Zwischenraum 20 axial beabstandet und die zweite Stirnfläche des Rotors 13.2 ist von der zweiten Gehäuseinnenwand 44 durch einen zweiten Zwischenraum 21 beabstandet. Im Bereich des Gehäuses 17 ist dabei ein Kühlmittelkanal 22 angeordnet, der die Axialflussmaschine mit Kühlmittel versorgt. Der gesamte Kühlkreislauf ist dabei zum Zweck einer besseren Übersichtlichkeit nicht dargestellt. Der Kühlmittelkanal 22 weist dabei in dem Abschnitt, indem er axial am nächsten zum Rotor benachbart ist, einen Kühlmittelauslass 23 auf. Als Kühlmittelauslass kann dabei einerseits nur die Austrittsstelle des Kühlmittels aus dem Kühlmittelkanal 22 gemeint sein, andererseits kann der Kühlmittelauslass 23 jedoch auch ein Teilabschnitt des Kühlmittelkanals 22 mit bestimmter Größe sein. Sowohl der Kühlmittelkanal 22 aus auch der Kühlmittelauslass 23 weisen dabei einen bestimmten Querschnitt auf, dabei können die Querschnitte gleich groß, aber auch unterschiedlich groß ausgeführt sein. Eine mögliche Ausführungsvariante ist beispielsweise, dass der Kühlmittelauslass 23 gegenüber dem Kühlmittelkanal 22 verjüngt ist, um beispielsweise die Strömungsgeschwindigkeit des Kühlmittels vor dem Austritt aus dem Kühlmittelauslass 23 zu erhöhen. Die Verjüngung kann dabei einerseits abrupt, aber auch allmählich über Bereich des Kühlmittelauslasses 23 erfolgen. Der Rotor 3 weist dabei ebenfalls einen oder mehrere entsprechende Kühlmittelkanäle auf, schematisch gezeigt ist dabei ein axial verlaufender Rotorkühlmitteleinlass 24, der mit einem radial verlaufenden Rotorkühlmittelauslass 25 verbunden ist. Der Rotorkühlmittelauslass 25 verläuft in diesem Fall radial von der Position des Rotorkühlmitteleinlasses 25 bis zum Außenumfang 14 des Rotors, wo das Kühlmittel dann beispielsweise durch Zentrifugalkräfte des Rotors befördert, aus dem Rotor in den Gehäuseinnenraum 26 austritt.

An der dem Kühlmittelauslass zuwandten Stirnfläche 13 des Rotors 3 und radial angrenzend an den radial äußeren Teil des Rotorkühlmitteleinlasses 24 ist dabei noch ein umfänglich verlaufendes Ringelement 27 angeordnet. Das Ringelement 27 kann beispielsweise auch aus der Vergussmasse des Rotors ausgebildet sein. Der Kühlmittelkanal 22 und der Kühlmittelauslass 23 befinden sich dabei nicht in Kontakt mit Teilen des Rotors 3 oder des Ringelements 27 um das Auftreten von Reibungsverlusten zu verhindern. Der Kühlmittelauslass 23 und der Rotorkühlmitteleinlass 24 sind dennoch über den zweiten Zwischenraum 21 oder zumindest über einen Teilabschnitt des zweiten Zwischenraums 21 hinweg miteinander fluidverbunden. Dies kann beispielsweise darüber erreicht werden, dass das Kühlmittel mit einer ausreichend hohen Strömungsgeschwindigkeit aus dem Kühlmittelauslass 23 austritt um über den Zwischenraum hinweg auf die, in diesem Fall, zweite Stirnfläche 13.2 des Rotors 3 und/oder in den Rotorkühlmitteleinlass 24 befördert, beispielsweise gespritzt, zu werden. Auf der Stirnfläche 13 des Rotors 3 befindliches Kühlmittel kann dann beispielsweise mittels über eine Rotation des Rotors 3 und die somit auftretenden Zentrifugalkräfte in den Rotorkühlmitteleinlass befördert werden. Das Ringelement 27 dient unter anderem dazu, das Kühlmittel aufzustauen, bis es in Rotorkühlmitteleinlass 24 abfließen kann bzw. auch um zu verhindern, dass das Kühlmittel in den Luftspalt 28 zwischen Rotor 2 und Stator 3 dringen kann.

Das Ringelement kann dabei derart ausgestaltet sein, dass sich eine ringförmige Kavität ausbildet, indem das Ringelement einen axialen Steg 45 aufweist, der sich von der Stirnfläche des Rotors in axiale Richtung erstreckt und an den axialen Steg 45 ein radialer Steg 46 angeordnet ist, der sich radial in Richtung der Zentralachse 12 erstreckt. Allerdings sind auch andere Lösungen denkbar, beispielsweise könnte das Ringelement 27 nur einen axialen Steg 45 aufweisen und der gegenüberliegende Teil des Gehäuses oder Stators eine entsprechende Aussparung, die gemeinsam mit dem Ringelement eine Labyrinthdichtung ausbildet. Auch andere, für den Fachmann naheliegende Ausführungsformen, die ein Aufstauen und Verteilen des Kühlmittels in die Rotorkühlmitteinlässe ermöglicht, sowie verhindert, dass das Kühlmittel in den Luftspalt gelangt, sind denkbar.

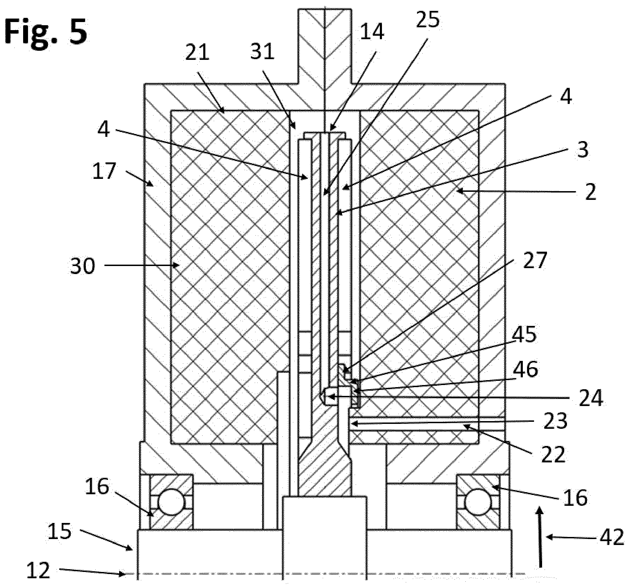

Fig. 5 zeigt dabei eine schematische Darstellung einer anderen möglichen Ausführungsform der Axialflussmaschine. Für eine verbesserte Übersichtlichkeit ist dabei nur jene Hälfte mit dem Kühlmittelkanal 22 der Axialflussmaschine 1 gezeigt. Hierbei ist Bereich des zweiten Zwischenraums 21, also auf der dem ersten Stator 2 gegenüberliegenden Seite des Rotors, ein zweiter Stator 30 angeordnet. Der zweite Stator 30 ist dabei bevorzugt baulich dem ersten Stator 2 gleich ausgeführt. Auch andere Ausführungsvarianten sind denkbar. So kann die Rotorwelle 15 genau wie im ersten Stator 2 ebenso im zweiten Stator 30 mit einem entsprechenden Lager 16 gelagert sein. Der zweite Stator 30 ist ebenfalls im Gehäuseinnenraum 26 angeordnet und durch vom Rotor 3 durch einen dritten Zwischenraum 31 beabstandet. Bei dem dritten Zwischenraum handelt es sich demnach um einen Teilraum des zweiten Zwischenraums 21. In dem gezeigten Fall verläuft der Kühlmittelkanal 22 sowohl durch das Gehäuse 17 als auch an den unmittelbar daran angrenzenden ersten Stator 2. Der Kühlmittelauslass 23 befindet sich dabei im ersten Stator 2, wobei der erste Stator 2 in diesem Bereich eine sich axial erstreckende Ausformung haben kann, um den Kühlkanal 22 bzw. den Kühlmittelauslass 23 näher an den Rotor 3 zu führen, sodass das Kühlmittel nur eine Teilstrecke des ersten Zwischenraums 20 überwinden muss. Äquivalent hierzu könnte der Kühlkanal auch im Gehäuse 17 und im zweiten Stator 30 bzw. in beiden Statoren 2,30 angeordnet sein.

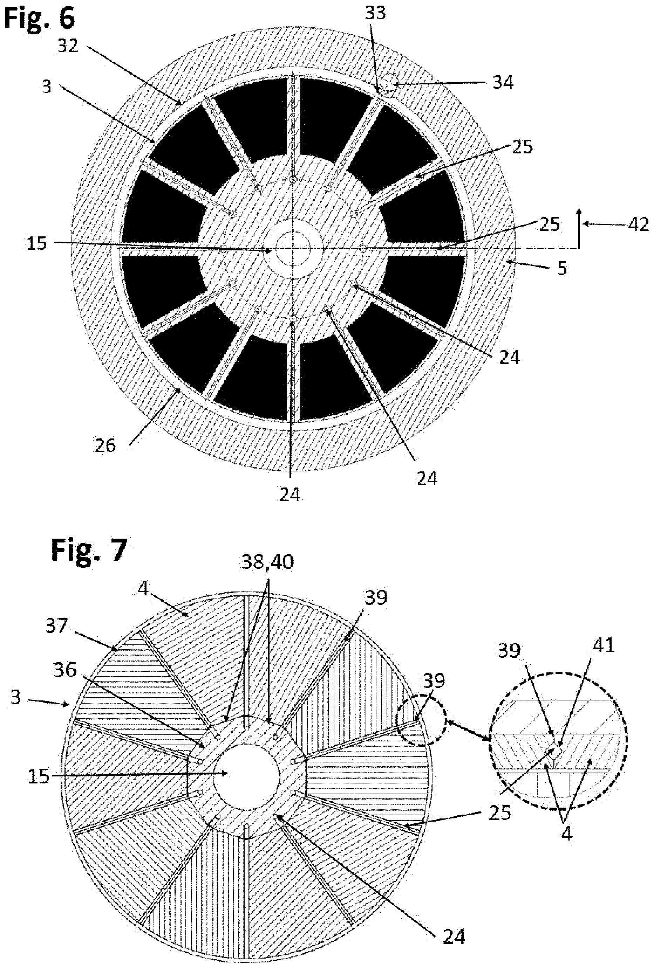

Fig. 6 zeigt in einer schematischen Darstellung einen Schnitt durch eine erfindungsgemäße Axialflussmaschine 1. Gezeigt ist die Rotorwelle 15 und der damit drehfest verbundene Rotor 3. Der Rotor 3 befindet sich im Gehäuseinnenraum 26. An einer Innenfläche 32 des Gehäuses angeordnet, befindet sich dabei ein Abstreifelement 33, das sich zum Außenumfang 14 des Rotors 3 hin erstreckt und diesen bevorzugt gerade nicht berührt. Benachbart zum Abstreifelement 33 ist dabei ein Rückführkanal 34 im Gehäuse 17 angeordnet, der das durch das Abstreifelement 33 abgestreifte Kühlmittel zum Kühlmittelkanal (nicht gezeigt) rückführt. Dies kann beispielsweise mittels einer Kühlmittelpumpe (nicht gezeigt) erfolgen oder über eine entsprechende Positionierung des Abstreifelements 33 bzw. des Rückführkanals 34. Eine entsprechende Positionierung könnte beispielsweise darüber erreicht werden, dass der Rückführkanal 34 höher positioniert ist als der Kühlmittelauslass 23. Mit höher positioniert ist dabei gemeint, dass sich der Rückführkanal 34 in Richtung 42 weiter entfernt, zur Zentralachse 12 befindet als der oder die Kühlmittelauslässe 23 bzw. dass ein sich Rückführkanal befindliches Kühlmittel eine höhere potentielle Energie aufweist als ein sich im Kühlmittelkanal 22 befindliches Kühlmittel. Beispielhaft sind zwei Rotorkühlkanäle bestehend jeweils aus Rotorkühlmitteinlässen 24 und Rotorkühlmittelauslässen 25 gezeigt. Auch eine höhere Anzahl an Rotorkühlkanälen ist denkbar. Zusätzlich kann auch noch ein Ringelement 27 vorgesehen sein, das dabei unterstützt das Kühlmittel von der Stirnfläche 13 des Rotors 3 in die Rotorkühlmitteleinlässe 24 zu befördern (nicht gezeigt).

Fig. 7 zeigt einen schematischen Schnitt durch eine mögliche Axialflussmaschine 1. Gezeigt ist dabei eine Rotorwelle 15 und ein darauf befestigten Rotor 3 - und zwar über dessen an der Rotorwelle 15 kraftschlüssig aufsitzenden Rotornabe 36. Dem Rotor 2 sind zudem Magnete 4 zugeordnet, welche kreisförmig um die Rotorwelle 15 angeordnet sind.

Zudem weist der Rotor 3 eine am Außenumfang 14 des Rotors 3 angeordnete und diesen geschlossen umlaufende Abstützung 37 auf. Die Abstützung 37 belastet die Magnete 4 mit einer radial nach innen gerichteten Spannkraft Fr und wirkt der Zentrifugalkraft entgegen.

Die Magnete sitzen auf der Rotornabe 36 über erste Klebefugen 38 auf und schließen über zweite Klebefugen 39 aneinander an - in den ersten und zweiten Klebefugen 38, 39 ist hierzu der Klebstoff versehen. Die Rotornabe 36 weist beispielsweise im Querschnitt ein polygonales Außenprofil mit Seitenkanten 40 auf. Auf je einer Seitenkante 40 sitzt ein Magnet 4 mit je einer ersten Klebefuge 38 auf.

Der Rotor 3 besteht daher in einem kreisringförmigen Umfangsbereich im Wesentlichen aus Magneten 4. Dies stellt ein maximiertes Magnetvolumen zu Verfügung, um eine besonders hohe Motorleistung zu erreichen.

Durch diese kompakte Bauweise des Rotors 3 bietet sich auch an, die Magneten 4 aus einem Ferritmaterial auszubilden. Dies reduziert die Kosten des Rotors 3 erheblich - womit eine kostengünstig aufgebaute Axialflussmaschine 1 ermöglicht wird.

Erfindungsgemäß sind die Magnete 4 zudem mit Facetten 41 versehen, wobei Facetten derart ausgebildet sind, dass zueinander benachbart angeordnete Permanentmagnete über die Facetten 41 den Rotorkühlmittelauslass 25 ausbilden. Ein Teil des Kühlkanals kann dabei auch durch die zweiten Klebefugen 39 bzw. den darin befindlichen Klebstoff ausgebildet sein.

## Patentansprüche

1. Axialflussmaschine mit einem ersten scheibenförmigen Stator mit Statorzähnen und mit, um die Statorzähne angeordnete, elektrischen Wicklungen und mit einem entlang einer Zentralachse neben dem ersten Stator angeordneten und um die Zentralachse drehbar ausgeführten, scheibenförmigen Rotor mit einer ersten und einer zweiten Stirnfläche, die axial voneinander beabstandeten sind, wobei der Rotor mehrere Magnete aufweist, wobei die Magnete kreisförmig um die Zentralachse angeordnet sind ,und wobei es sich insbesondere Permanentmagnete handelt, und mit einem Gehäuse mit einem Gehäuseinnenraum, in dem der erste Stator und der Rotor angeordnet sind, und mit zumindest einer ersten Gehäuseinnenwand, die der ersten Stirnfläche des Rotors gegenüberliegt und zumindest einer zweiten Gehäuseinnenwand, die der zweiten Stirnfläche des Rotors gegenüberliegt, und wobei der erste Stator zwischen erster Gehäuseinnenwand und der ersten Stirnfläche des Rotors angeordnet ist und der erste Stator und die erste Stirnfläche des Rotors durch einen ersten Zwischenraum axial beabstandet ist und die zweite Stirnfläche des Rotor von der zweiten Gehäuseinnenwand durch einen zweiten Zwischenraum axial beabstandet ist, und wobei das Gehäuse einen Kühlmittelkanal mit einem Kühlmittelauslass aufweist oder das Gehäuse und der erste Stator einen Kühlmittelkanal mit einem Kühlmittelauslass aufweist, wobei der Kühlmittelauslass jener Teil des Kühlmittelkanals ist, welcher dem Rotor axial am nächsten benachbart ist, und wobei der Rotor einen Rotorkühlkanal mit einem Rotorkühlmitteleinlass aufweist, wobei der Rotorkühlmitteleinlass auf der dem Kühlmittelauslass zugendwandten Stirnfläche des Rotors angeordnet ist, **dadurch gekennzeichnet, dass** der Kühlmittelauslass und der Rotorkühlmitteleinlass voneinander in axialer Richtung beabstandet sind und über den ersten oder den zweiten Zwischenraum fluidverbunden sind, insbesondere wobei für den Fall, dass sich der Kühlmittelauslass im Gehäuse befindet, die Fluidverbindung über den zweiten Zwischenraum gegeben ist oder für den Fall, dass sich der Kühlmittelauslass im ersten Stator befindet, die Fluidverbindung über den ersten Zwischenraum gegeben ist.

2. Axialflussmaschine nach Anspruch 1, **dadurch gekennzeichnet, dass** der Rotorkühlkanal einen Rotorkühlmitteleinlass mit axialer Erstreckungsrichtung und einen Rotorkühlmittelauslass mit radialer Erstreckungsrichtung aufweist, wobei der Rotorkühlmitteleinlass radial unterhalb der Magnete positioniert ist, und der Rotorkühlmittelauslass bis zum Außenumfang des Rotors verläuft, wobei Rotorkühlmitteleinlass und Rotorkühlmittelauslass miteinander fluidverbunden sind.

3. Axialflussmaschine nach Anspruch 1 und/oder 2, **dadurch gekennzeichnet, dass** der Rotor einen, insbesondere aus einem weichmagnetischen Material gefertigten, Rotorrückschluss aufweist, wobei die Magnete des Rotors zumindest teilweise auf der dem ersten Stator zugewandten Seite und der Rotorrückschluss zumindest teilweise auf der dem ersten Stator abgewandten Seite des Rotors angeordnet ist.

4. Axialflussmaschine nach Anspruch 1 und/oder 2, **dadurch gekennzeichnet, dass** der Rotor eine, insbesondere sternförmige, Haltestruktur zur Aufnahme der Magnete aufweist, und wobei der Rotorkühlkanal zumindest teilweise, insbesondere vollständig, innerhalb der Haltestruktur verläuft.

5. Axialflussmaschine nach Anspruch 1 und/oder 2, **dadurch gekennzeichnet, dass** der Rotor eine Rotornabe und kreisförmig um die Zentralachse angeordneten Permanentmagnete aufweist, sowie eine am Außenumfang des Rotors angeordnete Abstützung aufweist, welche die Permanentmagnete mit einer radial nach innen gerichteten Spannkraft belastet, wobei die Permanentmagnete auf der Rotornabe über eine mit Klebstoff versehene erste Klebefuge aufsitzen und zueinander nur über eine zweite Klebefuge umfänglich voneinander beabstandet sind, und wobei die Permanentmagnete derart facettiert sind, dass zueinander benachbart angeordnete Permanentmagnete über die Facetten den Rotorkühlkanal ausbilden.

6. Axialflussmaschine nach einem der vorhergehenden Ansprüche, **dadurch gekennzeichnet, dass** im Bereich des zweiten Zwischenraums ein zweiter Stator mit Statorzähnen und mit, um die Statorzähne angeordnete, elektrischen Wicklungen, entlang der Zentralachse angeordnet ist, wobei der zweite Stator und der die zweite Stirnfläche des Rotors durch einen dritten Zwischenraum axial voneinander beabstandet sind.

7. Axialflussmaschine nach einem der vorhergehenden Ansprüche, **dadurch gekennzeichnet, dass** ein, sich ein im Rotor oder auf einer Stirnfläche des Rotors befindliches Kühlmittel durch die Ausbildung einer Zentrifugalkraft in oder durch den Rotorkühlkanal befördert wird.

8. Axialflussmaschine nach einem der vorhergehenden Ansprüche, **dadurch gekennzeichnet, dass** der Kühlmittelauslass eine Mittelachse aufweist und der Rotorkühlmitteleinlass eine Mittelachse aufweist, wobei die Mittelachse des Kühlmittelauslasses und die Mittelachse des Rotorkühlmitteleinlasses in radialer Richtung voneinander beabstandet sind und wobei die Mittelachse des Rotorkühlkühlmitteleinlasses radial weiter entfernt von der Zentralachse ist als die Mittelachse des Kühlmittelauslasses.

9. Axialflussmaschine nach einem der vorhergehenden Ansprüche, **dadurch gekennzeichnet, dass** der Rotor ein Ringelement aufweist, wobei das Ringelement an der dem Kühlmittelkanalauslass zugewandten Stirnfläche des scheibenförmigen Rotors und radial angrenzend an den Rotorkühlmitteleinlass angeordnet ist, wobei das Ringelement vorteilhafterweise, stoffschlüssig, insbesondere vorteilhafterweise durch Umspritzen, mit dem Rotor verbunden ist.

10. Axialflussmaschine nach einem der vorhergehenden Ansprüche, **dadurch gekennzeichnet, dass** sich an einer Innenfläche des Gehäuses ein Abstreifelement befindet, das sich zum Außenumfang des Rotors erstreckt, und wobei benachbart an das Abstreifelement ein Rückführkanal im Gehäuse angeordnet ist, wobei der Rückführkanal mit dem Kühlmittelkanal fluidverbunden ist.

11. Axialflussmaschine nach Anspruch 10 **dadurch gekennzeichnet, dass** die Rückführung eines Kühlmittels vom Rückführkanal zum Kühlmittelkanal mittels einer Kühlmittelpumpe erfolgt.

12. Axialflussmaschine nach Anspruch 10, **dadurch gekennzeichnet, dass** das Abstreifelement und der Rückführkanal höher positioniert sind als der Kühlmittelkanalauslass, sodass die Rückführung des Kühlmittels vom Rückführkanal zum Kühlmittelkanalauslass ohne eine Kühlmittelpumpe erfolgen kann.

13. Axialflussmaschine nach Anspruch 10, **dadurch gekennzeichnet, dass** sich an einer Innenfläche des Gehäuses ein zweites Abstreifelement befindet, das sich zum Außenumfang des Rotors erstreckt, und wobei benachbart an das zweite Abstreifelement ein zweiter Rückführkanal im Gehäuse angeordnet ist, insbesondere wobei die Position des zweiten Abstreifelements und des zweiten Rückführkanals der Position des ersten Abstreifelements beziehungsweise der Position des ersten Rückführkanals auf gleicher Höhe gegenüberliegend ist.

14. Axialflussmaschine nach einem der vorhergehenden Ansprüche **dadurch gekennzeichnet, dass** die Strömungsgeschwindigkeit eines Kühlmittels im Kühlmittelkanal zumindest derart hoch, dass es direkt auf gegenüberliegende Stirnfläche des Rotors beziehungsweise in den Rotorkühlmitteleinlass gespritzt wird.

15. Axialflussmaschine nach einem der vorhergehenden Ansprüche **dadurch gekennzeichnet, dass** der Kühlmittelkanal einen Querschnitt aufweist und wobei der Kühlmittelauslass einen Querschnitt aufweist und wobei der Querschnitt des Kühlmittelauslasses gegenüber dem Querschnitt des Kühlmittelkanals verjüngt ist.
